# EUROPÄISCHE PATENTSCHRIFT

(11) **EP 0 735 301 B1**
(45) Veröffentlichungstag und Bekanntmachung des Hinweises auf die Patenterteilung: **04.10.2001**
(21) Anmeldenummer: 95119289.7
(22) Anmeldetag: 07.12.1995
(51) Int. Cl.: F16K 1/22, F16K 17/38, G05D 23/02

(54) **Thermostatventil**
Thermostatic valve
Robinet thermostatique

(30) Priorität: 31.03.1995 DE 19512046
(43) Veröffentlichungstag der Anmeldung: 02.10.1996
(73) Patentinhaber: Behr Thermot-tronik GmbH & Co., 70806 Kornwestheim (DE)
(72) Erfinder: Saur,Roland, D-70195 Stuttgart (DE)
(74) Vertreter: Patentanwälte Ruff, Wilhelm, Beier, Dauster & Partner

(56) Entgegenhaltungen:
- DE-U- 8 513 209
- GB-A- 1 446 704
- US-A- 3 292 856
- US-A- 4 978 060
- US-A- 5 048 751

## Beschreibung

Die Erfindung betrifft ein Ventil mit einem bei Erreichen einer vorgegebenen Temperatur ein mit einer Feder in Schließrichtung belastetes Verschlußglied in Öffnungsrichtung bewegenden thermostatischen Arbeitselement, wobei das Verschlussglied eine schwenkbare Klappe ist, deren Schwenkachse im Abstand zu ihrem Flächenschwerpunkt angeordnet ist und an die ein Arbeitskolben des thermostatischen Arbeitselementes in Abstand zur Schwenkachse angreift

Bei einem bekannten Ventil der eingangs Art (US 3 392 856) ist die schwenkbare Klappe mit einer Rückstellfeder belastet, die aus zwei Federwicklungen, einem Bügel und Schenkeln gebildet ist. Diese Rückstellfeder dient gleichzeitig auch als Rückstellfeder für das thermostatische Arbeitselement, die den bei erhöhter Temperatur ausfahrenden Arbeitskolben bei wieder absinkender Temperatur in das Gehäuse zurückdrückt. Derartige thermostatische Arbeitselemente entwickeln einerseits bei einem Ausfahren erhebliche Kräfte, jedoch benötigen sie andererseits auch ähnlich große Kräfte, um den Arbeitskolben wieder zurückzudrücken. Diese Kräfte werden von der Rückstellfeder aufgebracht, die darüber hinaus vorgespannt sein muß, damit auch bis in die Schließstellung des Ventils hinein ausreichend große Rückstellkräfte vorhanden sind. Das bekannte Ventil funktioniert einerseits als mittels des thermostatischen Arbeitselementes betriebenes Schaltventil und andererseits auch als Überdruckventil. Die Funktion als Überdruckventil ist allerdings sehr beschränkt, da es nur auf Überdrücke ansprechen kann, die an der Klappe Kräfte erzeugen, die größer als die Rückstellkraft der Rückstellfeder sind.

Der Erfindung liegt die Aufgabe zugrunde, ein Ventil der eingangs genannten Art so auszubilden, dass es nicht nur auf eine vorgebbare Temperatur anspricht, sondern zusätzlich auf einen wählbaren Überdruck.

Diese Aufgabe wird dadurch gelöst, dass dem Arbeitskolben des thermostatischen Arbeitselementes eine eigene Rückstellfeder zugeordnet ist und dass die Kennlinie der die Klappe belastenden Feder auf einen vorgegebenen Öffnungsdruck ausgelegt ist.

Aufgrund der Trennung der Rückstellfunktion von der Funktion einer auf einen Überdruck nachgebenden Feder wird erreicht, dass die temperaturabhängige Schaltfunktion einerseits und die druckabhängige Sicherheitsfunktion andererseits völlig getrennt voneinander sind und entsprechend unabhängig voneinander ausgelegt werden können. Das Ventil arbeitet somit wie zwei voneinander unabhängige, parallel geschaltete Ventile.

Da die Schwenkachse in Abstand zu dem Flächenschwerpunkt der Klappe angeordnet ist, erzeugt ein Überdruck ein Drehmoment, das in Öffnungsrichtung der Klappe wirksam ist. Da die Klappe unabhängig von dem Schaltelement bewegbar ist, kann sie bei einem Überdruck dessen Wert von der von dem Schaltelement unabhängingen Feder vorgegeben wird, sich in Öffnungsrichtung bewegen, auch wenn das Schaltelement nicht angesprochen hat. Die Klappe weist den Vorteil auf, daß sehr schnell ein großer Strömungsquerschnitt freigegeben wird, so daß beispielsweise die Funktion eines in der Kühlanlage des Verbrennungsmotors angeordneten Thermostatventils unbeeinflußt bleibt.

In weiterer Ausgestaltung der Erfindung ist ein im wesentlichen rohrförmiges Gehäuse, vorzugsweise aus Kunststoff, vorgesehen, das eine Ventildichtfläche und eine Halterung für das Schaltelement aufweist. Damit wird erreicht, daß das gesamte Ventil eine eigene Baueinheit bildet. Diese Baueinheit läßt sich beispielsweise innerhalb der Kühlanlage eines Verbrennungsmotors an einer geeigneten Stelle anordnen, beispielsweise im Bereich eines Flanschanschlusses, der an dem Motoraustritt des Verbrennungsmotors angebracht wird.

Weitere Merkmale und Vorteile der Erfindung ergeben sich aus der nachfolgenden Beschreibung der in der Zeichnung dargestellten Ausführungsbeispiele.
- Fig. 1: zeigt einen Axialschnitt durch ein erfindungsgemäßes Ventil und
- Fig. 2: eine Ansicht in Richtung des Pfeiles II auf das Ventil der Fig. 1.

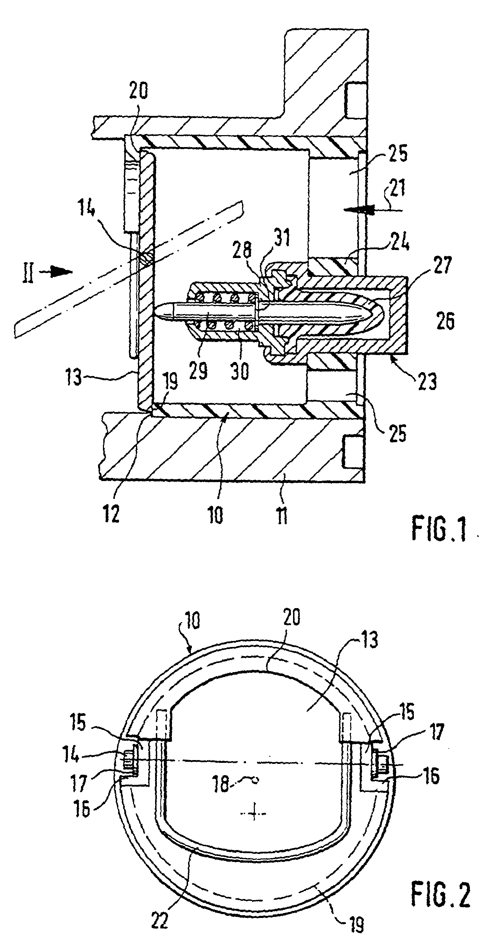

Das in Fig. 1 und 2 dargestellte Ventil besitzt ein im wesentlichen rohrförmiges Gehäuse (10), das in einen Anschlußflansch (11) eingesteckt und mit einem Anschlag (12) in axialer Richtung fixiert ist. Der Anschluß (11) wird vorzugsweise an einem Motoraustritt eines Verbrennungsmotors angeflanscht, aus welchem das den Verbrennungsmotor durchströmende Kühlmittel den Motor verläßt und beispielsweise zu einem Thermostat-Regelventil strömt.

In dem Gehäuse (10) ist eine als Verschlußglied dienende Klappe (13) mittels einer Schwenkachse (14) gelagert. Die Schwenkachse (14) ist in Lageraufnahmen (15) des Gehäuses (10) gelagert, die sich im Bereich von taschenartigen Aussparungen (16) befinden. Die Schwenkachse (14) ist ein Bolzen, der durch die Klappe (13) und die Lageraufnahmen (15) hindurchgesteckt ist und der mittels außen aufgesteckten Sicherungsringen (17), beispielsweise Federringen, axial fixiert ist. Diese Sicherung reicht aus, da im eingebauten Zustand der Anschluß (11) ein axiales Verschieben der Schwenkachse (14) verhindert.

Die Schwenkachse (14) der Klappe (13) befindet sich in Abstand zu dem in Fig. 2 angedeuteten Flächenmittelpunkt (18) der Klappe (13). Ein auf einer Seite der Klappe (13) entstehender Überdruck führt somit zu einem Drehmoment bezüglich der Schwenkachse (14), das bestrebt ist, die Klappe (13) zu verschwenken.

Das Gehäuse (13) ist mit Ventilsitzflächen (19, 20) versehen, die der Klappe (13) zugeordnet sind. Diese Ventilsitzflächen (19, 20) befinden sich in einem axialen Abstand, der der Dikke der Klappe (13) entspricht. Sie sind im Bereich der Schwenkachse (14) unterteilt, so daß die bis auf einer Aussparung im Bereich der Schwenkachse (14) im wesentlichen halbkreisförmigen Dichtflächen (19, 20) einmal der Innenseite und zum anderen der Außenseite der Klappe (13) zugeordnet sind, d.h. der der Strömungsrichtung (21) zugewandten Innenseite und der der Strömungsrichtung abgewandten Außenseite. Die Klappe (13) ist mit einer Bügelfeder (22) auf ihrer Außenseite belastet, die die Klappe (13) in der in Fig. 1 dargestellten geschlossenen Stellung hält. Die Bügelfeder (22), die vorzugsweise vorgespannt ist, ist mit ihren Enden in Aussparungen des Gehäuses (10) eingesteckt. Die bisher beschriebenen Elemente des Ventils bilden somit ein Überdruckventil, das bei einem Überdruck durch Aufschwenken der Klappe (13) öffnet. Die Größe des ein Öffnen bewirkenden Überdrucks wird dabei von der vorgespannten Bügelfeder (22) bestimmt.

Das Ventil ist darüber hinaus auch noch als ein temperaturabhängig schaltendes Ventil ausgebildet. Hierzu ist als Schaltelement ein thermostatisches Arbeitselement (23) vorgesehen, das in einer Halterung (24) des Gehäuses (10) gehalten ist, die mittels Stegen (25) einteilig mit dem Gehäuse (10) ausgebildet ist. Das thermostatische Arbeitselement (23) besitzt ein Gehäuse (26), in welchem ein Dehnstoff, insbesondere eine Wachsmischung, untergebracht ist. Das offene Ende des Gehäuses (26) ist mit einer sackförmigen Membran (27) abgedichtet, die mittels eines Führungseinsatzes (28) dichtend eingespannt ist. In diese Membran (27) und damit in das Gehäuse (26) ragt ein Arbeitskolben (29), der von dem Führungseinsatz (28) geführt ist. Der Arbeitskolben (29) greift in einem Abstand zur Schwenkachse (14) an die Klappe (13) an. Das thermostatische Arbeitselement (23) ist in Strömungsrichtung (21) vor der Klappe (13) angeordnet. Das thermostatische Arbeitselement (23) spricht auf die Temperatur des abzusperrenden Mediums an, insbesondere einer Kühlflüssigkeit einer Kühlanlage eines Verbrennungsmotors. Die Ansprechtemperatur oder Öffnungstemperatur des thermostatischen Arbeitselementes (23), bei welcher der Arbeitskolben (29) seine Ausfahrbewegung aus dem Gehäuse (26) beginnt, ist durch die Wahl des Dehnstoffes, die Zusammensetzung der Wachsmischung, einstellbar. Bei einer Kühlanlage eines Verbrennungsmotors wird diese Öffnungstemperatur auf einen Bereich von 60°C bis 80°C eingestellt. Der ausfahrende Arbeitskolben (29) nimmt die Klappe (13) mit und öffnet damit das Ventil temperaturabhängig. Die Verwendung einer Klappe als Verschlußelement hat den Vorteil, daß schon bei relativ kleinen Schwenkbewegungen der Klappe ein relativ großer Strömungsquerschnitt freigegeben wird. Da keine feste Verbindung zwischen dem Arbeitskolben (29) und der Klappe (13) besteht, kann der Arbeitskolben (29) sich bei Übertemperaturen, d.h. weit seine Öffnungstemperatur überschreitenden Temperaturen, ungehindert ausfahren.

Da mit einem derartigen Klappenventil insbesondere im Bereich der Lagerungen (15) keine absolute Dichtheit erzielbar ist, ergibt sich eine gewisse Leckströmmenge. Diese Leckströmmenge sorgt dafür, daß eine gewisse Strömung in Strömungsrichtung (21) immer vorhanden ist, so daß erwärmtes Medium mit der höheren Temperatur in den Bereich des thermostatischen Arbeitselementes (23) gelangt. Um eine ausreichende Strömungsmenge auch bei geschlossener Klappe (13) sicherzustellen, sind unter Umständen zusätzliche Bypassöffnungen im Bereich der Klappe (13) erforderlich.

Um keinen Beschränkungen bezüglich der Auslegung des Öffnungsüberdruckes und der Auslegung der Rückstellung des Arbeitskolbens (29) zu haben, wird bei dem Ausführungsbeispiel nach Fig. 1 vorgesehen, daß dem Arbeitskolben (29) eine eigene Rückstellfeder (30) zugeordnet ist. Diese Rückstellfeder (30) stützt sich zwischen einer Verlängerung des Führungseinsatzes (28) und einem an dem Arbeitskolben (29) angebrachten Federteller (31) ab.

Bei einer abgewandelten Ausführungsform wird anstelle einer Bügelfeder (22) eine Zugfeder vorgesehen, die zwischen einem der Stege (25) und der Klappe (13) angebracht wird.

## Patentansprüche

1. Ventil mit einem bei Erreichen einer vorgegebenen Temperatur ein mit einer Feder (22) in Schließrichtung belastetes Verschlussglied in Öffnungsrichtung bewegenden thermostatischen Arbeitselement (23), wobei das Verschlussglied eine schwenkbare Klappe (13) ist, deren Schwenkachse (14) in Abstand zu ihrem Flächenschwerpunkt (18) angeordnet ist und an die ein Arbeitskolben (29) des thermostatischen Arbeitselementes (23) in Abstand zur Schwenkachse angreift,
**dadurch gekennzeichnet, dass** dem Arbeitskolben (29) des thermostatischen Arbeitselementes (23) eine eigene Rückstellfeder (30) zugeordnet ist und **dass** die Kennlinie der die Klappe belastenden Feder (22) auf einen vorgegebenen Öffnungsdruck ausgelegt ist.

2. Ventil nach Anspruch 1, **dadurch gekennzeichnet, daß** ein im wesentlichen rohrförmiges Gehäuse (10), vorzugsweise aus Kunststoff, vorgesehen ist, das Ventildichtflächen (19) und eine Halterung (24) für das Schaltelement (23) aufweist.

3. Ventil nach Anspruch 1 oder 2, **dadurch gekennzeichnet, daß** das Gehäuse (10) mit Ventilsitzflächen (19, 20) versehen ist, die dem Rand der Klappe (13) zugeordnet sind, wobei die Ventilsitzfläche (19, 20) im Bereich der Schwenkachse (14) geteilt und zum einen der Innenseite der Klappe und zum anderen der Außenseite der Klappe (13) zugeordnet sind.

4. Ventil nach Anspruch 3, **dadurch gekennzeichnet, daß** die Schwenkachse (14) durch die Klappe (13) und durch Lager (15) des Gehäuses (10) gesteckt und mittels Sicherungsringen (17) axial gesichert ist.

5. Ventil nach einem der Ansprüche 1 bis 4, **dadurch gekennzeichnet, daß** eine Bügelfeder (22) vorgesehen ist, die auf der dem thermostatischen Arbeitselement (23) gegenüberliegenden Seite der Klappe (13) aufliegt und die in dem Gehäuse (10) gehalten ist.

## Claims

1. Valve with a thermostatic operating element (23) that moves a sealing element, that is loaded in the closing direction with a spring (22), in the opening direction when a set temperature is reached, whereby the sealing element is a pivotable flap (13) whose pivot axis (14) is at a distance from its geometrical center of gravity (18), and an operating plunger (29) of the thermostatic operating element (23) contacts the flap at a distance from the pivot axis,
**characterized in that**
a reset spring (30) is assigned to the operating plunger (29) of the thermostatic operating element (23), and the characteristic of the spring (22) retaining the flap is set at a predetermined opening pressure.

2. A valve according to claim 1, **characterized in that** an essentially tubular housing (10) preferably of plastic is provided that has valve sealing surfaces (19) and a support (24) for the switch element (23).

3. A valve according to claim 1 or 2, **characterized in that** the housing (10) has valve seat surfaces (19, 20) assigned to the edge of the flap (13), whereby the valve seat surfaces (19, 20) are divided at the pivot axis (14) and are assigned to the inside and the outside of the flap (13).

4. A valve according to claim 3, **characterized in that** the pivot axis (14) is shoved through the flap (13) and the bearing (15) of the housing (10) and is axially fixed by means of retaining rings (17).

5. A valve according to one of claims 1 - 4, **characterized in that** a clip spring (22) is provided that lies on the side of the flap (13) opposite the thermostatic operating element (23) and is held in the housing (10).

## Revendications

1. Une soupape comportant un organe de fermeture chargé dans le sens de la fermeture par un ressort (22) et actionné, après avoir atteint une température déterminée, par un élément de commande thermostatique (23) qui se déplace dans le sens de l'ouverture, l'organe de fermeture étant un clapet pivotant (13) dont l'axe de pivotement (14) est disposé à une certaine distance du centre de gravité (18) du clapet qui est actionné par un piston de commande (29) de l'élément de commande thermostatique (23) à une certaine distance de l'axe de pivotement,
**caractérisée par** le fait que le piston de commande (29) de l'élément de commande thermostatique (23) possède son propre ressort de rappel (30) et par le fait que la courbe caractéristique du ressort de fermeture (22) du clapet est prévue pour une pression d'ouverture déterminée.

2. Soupape conforme à la revendication 1, et **caractérisée par** le fait qu'on a prévu un carter (10), de préférence en matière synthétique, dont la forme essentielle est cylindrique et qui comporte des surfaces de joint étanches (19) et un support (24) pour l'élément de commande (23).

3. Soupape conforme à la revendication 1 ou 2, et **caractérisée par** le fait que le carter (10) comporte des surfaces de joint étanches (19, 20) destinés au bord du clapet (13), et où les surfaces de joint (19, 20) sont partagées dans la zone de l'axe de pivotement, et orientées d'un côté vers la face interne et de l'autre côté vers la face externe du clapet (13).

4. Soupape conforme à la revendication 3, et **caractérisée par** le fait que l'axe de pivotement (14) traverse le clapet (13) et le palier (15) du carter (10), et qu'il est arrêté dans le sens axial par des circlips (17).

5. Soupape conforme à une des revendications 1 à 4, et **caractérisée par** le fait qu'on a prévu un ressort à arceau (22) contenu dans le carter (10) et qui repose sur la face du clapet (13) opposée à l'élément de commande thermostatique (23).
